# EUROPEAN PATENT APPLICATION

(11) **EP 4 181 046 A1**
(43) Date of publication of application: **17.05.2023**
(21) Application number: 22207276.1
(22) Date of filing: 14.11.2022
(51) Int. Cl.: G06Q 30/0601, G06Q 10/30

(54) **SYSTEM FOR THE CIRCULAR MANAGEMENT OF USED GARMENTS**

(30) Priority: 12.11.2021 EP 21208055; 11.11.2022 IT 202200023346
(71) Applicant: Atelier Riforma S.r.l., 10125 Torino (IT)
(72) Inventor: SECONDO, Sara, 10125 TORINO (IT); FERRERO, Elena, 10125 TORINO (IT)
(74) Representative: Studio Torta S.p.A.

(57) **Abstract**

A system **(1)** for the circular management of used garments to promote the reuse and/or recycling thereof in the circular fashion world. The system **(1)** is designed to: receive digital images of used garments; process the received digital images of the used garments to catalogue the used garments shown therein based on one or more cataloguing criteria that facilitate the reuse and/or recycling thereof in circular fashion to determine characteristics of the garments, such as the type of garment, colour, brand and seasonality; store the received digital images of the used garments together with their characteristics as determined; automatically offer for sale on an online marketplace the garments thus catalogued; and allow search via appropriate filters, selection and purchase of the used garments represented by the above-mentioned articles.

## Description

### CROSS REFERENCE TO RELATED APPLICATIONS

This patent application claims priority from European Patent Application No. 21208055.0 filed on November 12, 2021 and from Italian patent application no. 102022000023346 filed on November 11, 2022, the entire disclosure of which is incorporated herein by reference.

### TECHNICAL FIELD OF THE INVENTION

The present invention concerns a system for the circular management of used garments, in particular for cataloguing and sorting the garments to encourage the recycling, reuse and resale thereof in order to promote circular fashion.

### STATE OF THE ART

As is known, currently used garments, once they have been collected from the street collection bins, are manually sorted, in particular discarding items that cannot be repurposed, and sold in bales at a very low price per kilo to sorting firms that sort them into different categories based on a quality criterion (currently, cream, first, second and third choice). The garments thus sorted are then resold on the wholesale market and, in the majority of cases, exported to developing countries where, given the huge quantities that arrive, they end up mainly in landfill or are incinerated, with consequent damage to the environment.

### OBJECT AND SUMMARY OF THE INVENTION

The Applicant has ascertained that the current procedure for the management of used garments is time-consuming and inefficient.

In particular, the Applicant has ascertained that the recent transition towards the circular economy, where used garments are recovered and recycled, requires individual garments to be put to good use so that they are directed towards the most sustainable destination possible, re-entering the cycle as secondary raw material. The circular transition in progress has created new needs in the fashion sector, which have not been met, for example, the need of the circular fashion firms to efficiently procure the most suitable garments for their business, without having to purchase "blindly" and then having to discard part of the material purchased, or the need of clothes manufacturers to be compliant with the future EPR (Extended Producer Responsibility) which establishes that the producer is responsible for the entire life cycle of its products, even when they become waste items or are unsold.

According to the current procedures it is not easy to find used garments suitable for the various circular businesses, since purchase of the garments still takes place offline and "blindly", so that, apart from the quality sorting, it is not possible to choose other characteristics; in other words, according to the current procedures, the garments are sorted solely on the basis of quality, without registration and transmission of the particular characteristics of each garment, thus limiting the entry thereof into the circular economy system. It should be noted that the circular fashion businesses are typically second-hand shops looking for garments that respond to their brand identity, small upcycling brands looking for garments suited to their style and tailoring skills and firms dealing in textile regeneration that require garments composed 100 % of a single material.

In light of the above, the Applicant has observed that, given the different and growing needs of the circular fashion businesses, the current procedures do not meet market requirements. The Applicant has observed that, currently, there is no efficient solution for matching the wholesale demand for and supply of textile waste as a secondary raw material. The Applicant has also observed that only 1% of all discarded clothes are recycled into new garments, with a consequent negative impact on the environment.

The objective of the Applicant is therefore to facilitate the circular transition of the fashion industry, in particular by digitalizing the garment cataloguing process and facilitating circular businesses in the search for used garments suitable for their business, namely to provide a solution that brings together organisations that collect and sort textile waste and the firms that reuse or recycle it.

For these purposes, the Applicant has developed a technology based on artificial intelligence designed to rapidly catalogue the garments and offer them directly for sale on a business platform, in particular marketplace B2B (Business-to-Business).

The object of the present invention is therefore to provide a system for circular management of used garments, thus promoting recycling, reuse and resale and at least partly solving the problems of the known art.

According to the present invention, a system for circular management of used garments is provided, as claimed in the attached claims.

### BRIEF DESCRIPTION OF THE DRAWINGS

Figure 1 schematically shows a block diagram of a system for circular management of used garments according to an embodiment of the present invention.
Figure 2 schematically shows a block diagram of a system for circular management of used garments according to another embodiment of the present invention.

### Disclosure of preferred embodiments of the invention

The present invention will now be described in detail with reference to the attached figures to enable a person skilled in art to produce it and use it. Various modifications to the embodiments described will be immediately evident to people skilled in the art and the generic principles described can be applied to other embodiments and applications without departing from the protective scope of the present invention, as defined in the attached claims. Therefore, the present invention shall not be considered limited to the embodiments described and illustrated, but shall be given the widest protective scope in accordance with the characteristics described and claimed.

Where not defined otherwise, all the technical and scientific terms used here have the same meaning commonly used by people of ordinary experience in the sector pertaining to the present invention. In the event of conflict, the present description, including the definitions provided, will be binding. Furthermore, the examples are provided for purely illustrative purposes and as such shall not be considered limiting.

In particular, the block diagrams included in the attached figures and described below shall not be understood as a representation of the structural characteristics, or construction limitations, but shall be interpreted as a representation of functional characteristics, namely intrinsic properties of the devices, defined by the effects obtained, or functional limitations, which can be implemented in different ways, therefore so as to protect the functionalities of the same (possibility of functioning).

In order to facilitate understanding of the embodiments described here, reference will be made to some specific embodiments and a specific language will be used to describe them. The terminology used in the present document has the purpose of describing only particular embodiments, and is not intended to limit the scope of the present invention.

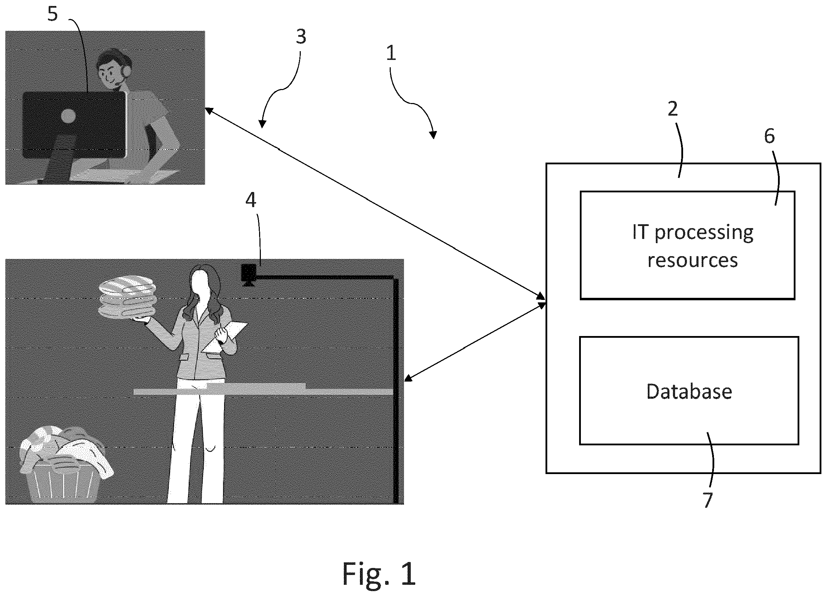

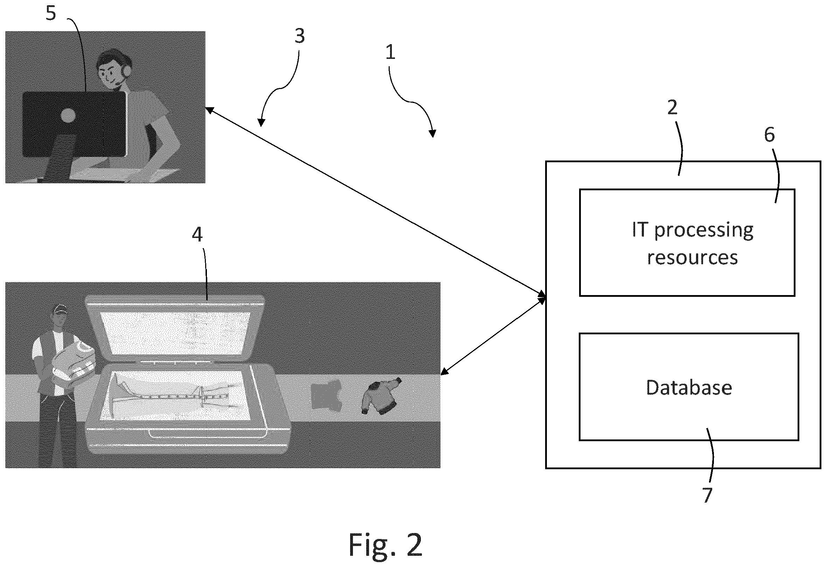

Figures 1 and 2 schematically show an IT system 1 for circular management of used garments to promote the reuse and/or recycling thereof in the circular fashion sector.

The system **1** for circular management of used garments comprises:
- a digital image capture system **3** configured to capture digital images of used garments and allow the captured digital images to be associated with information concerning the used garments shown therein, such as the presence or absence of defects and if necessary the types of defects; and
- an IT platform **2** designed to communicate with the digital image capture system **3** to receive the digital images of used garments and process the received digital images of the used garments to catalogue the garments shown therein based on one or more cataloguing criteria that facilitate the reuse and/or recycling thereof in circular fashion and to determine characteristics of the garments, such as the type of garment, colour, brand, seasonality, etc.

Conveniently, the digital image capture system **3** comprises:
- a digital image capture device **4** designed to capture digital images of the garments; and
- IT resources **5,** conveniently in the form of personal computer or laptop, designed to communicate on the one hand with the digital image capture device **4** to receive the digital images captured by the latter and allow an operator to associate with the received digital images the information concerning the used garments shown therein, such as the presence or absence of defects and if necessary the types of defects, and to communicate on the other hand with the IT platform **2** to provide it with the received digital images together with the information associated therewith.

In an embodiment shown in Figure 1, the digital image capture device **4** is a camera, for example a professional camera or even the camera of a mobile user terminal such as a smartphone, tablet, phablet, etc., which is supported by a C-stand to capture digital images of the garments in neutral light situations and with the garments positioned lying on a smooth white surface. It is noted that the digital images are preferably captured in the same position, at a predetermined distance and in a predefined position; in this way, it is possible to standardise the procedure for capturing the digital images of the garments.

In a different embodiment shown in Figure 2, the digital image capture device **4** is a scanner machine designed to capture in sequence the digital images to be provided to the IT resources **5** for subsequently associating the information concerning the used garments shown therein, in particular the presence of defects.

In an embodiment described here by way of non-limiting example, the digital image capture system **3** comprises a software application adapted to be stored and executed by the IT resources **5** designed so that, when executed, said resources are configured to control the operativity of the digital image capture device **4** to capture digital images of the garments, receive and store the digital images captured by the digital image capture device **4** and to allow an operator to associate with the digital images received the information concerning the used garments shown therein, in particular the presence of defects.

In particular, in order to allow a user to capture digital images relative to a garment via the digital image capture device **4,** the software application is designed so that, when executed, the digital image capture device **4** is designed to show a graphic interface on a screen of the digital image capture device **4** (for example, the smartphone screen or the scanner machine screen) designed to:
- show an image capture screen to allow the capture of at least an image of the garment to be recycled or resold, for example by pressing a screen button showing the icon of a camera with the wording "SHOOT"; and
- show a screen to allow the captured digital images of the garment to be recycled or resold to be approved or discarded, for example by pressing respective screen buttons showing an icon representing a tick indicating approval of the captured image and an icon representing an X indicating non-approval of the captured image.

It should be noted that, if one or more digital images are discarded, the software is designed so that the digital image capture device **4** is designed to show a graphic interface that allows return to the capture screen for a new capture of digital images of the garment.

Conveniently, the software is designed so that the digital image capture device **4** captures:
- a digital image of the front of the garment;
- if necessary, a digital image of the back of the garment, for example in the case of garments characterized by particular features (for example, decorations, patterns, etc.);
- if necessary, a digital image of the garment label, in particular showing the composition of the garment.

Once the captured digital images have been approved, the software is designed so that, when executed, the IT resources **5,** having received the digital images from the digital image capture device **4,** are designed to assign a unique code comprising a code or initials associated with the garment collection/sorting organisation that is using the device and a progressive number, in order to identify the digital images captured for each garment, catalogued by each garment collection/sorting organisation that is using the technology.

In order to allow the presence of defects to be highlighted, the software is designed so that, when executed, the IT resources 5 show a graphic interface designed to show a button, for example with the wording "PRESENCE OF DEFECTS" in order to indicate the presence of defects. In this way, any purchasers are informed that said garment is not suitable for resale in second-hand shops but for recycling, for example by carrying out alterations or for regeneration of the yarn. In the absence of defects, it is assumed that the garment is in good condition.

The IT platform **2** is designed to implement an artificial intelligence algorithm designed to process the digital images captured by the digital image capture system **3** to determine the characteristics of the garments as described in further detail below.

In particular, the IT platform **2** comprises:
- a database **7** structured to store digital images of the used garments in association with the information concerning the used garments shown therein (namely, the presence of defects and, if necessary, the types of defects) associated with them by an operator and the characteristics of the garments determined by the artificial intelligence algorithm and the relative sources, such as collection/sorting organisations or fashion firms; and
- IT resources **6** designed to communicate with the digital image capture system **3** to receive and process the captured digital images of used garments and the information concerning the used garments shown therein associated with them in the way described below.

In particular, the IT resources **6** are designed to:
- store in the database **7** the digital images received and the information associated with them;
- process the digital images stored in the database **7** to catalogue the used garments shown therein based on one or more cataloguing criteria that facilitate the reuse and/or recycling thereof in circular fashion, and determine characteristics of the garments such as type of garment, colour, brand, seasonality, etc.; and
- store in the database **7** the characteristics of the garments determined in combination with the corresponding digital images of the garments.

By way of example, the IT platform **2** implements the cloud computing paradigm, i.e. it is a cloud platform. Furthermore, according to an embodiment of the present invention, the database **7** implements the cloud computing model (namely, a database in cloud) connected to the IT resources **6** or integrated in the IT platform **2;** according to another embodiment of the present invention, the database **7** is a physical database, connected to the IT resources **6** and designed to receive and store the digital images received and processed by the IT platform **2.**

The IT resources **6** are furthermore designed to automatically offer for sale on an online marketplace the garments thus catalogued.

Furthermore, the system **1,** in particular the IT resources **6,** are designed to determine the price of the single garment based on the information relative to the garments.

The IT resources **6** further comprise an online sale software (also known as e-commerce) designed so that, when executed, the IT resources **6** are designed to generate a graphic interface to:
- allow display of the articles generated by the IT resources **6;** and
- allow search via appropriate filters, selection and purchase of the used garments represented by the above-mentioned articles.

The system **1** is therefore designed to:
- receive digital images of used garments;
- process the digital images received of the used garments to catalogue the used garments shown therein based on one or more cataloguing criteria that facilitate the reuse and/or recycling thereof in circular fashion and determine characteristics of the garments, such as the type of garment, colour, brand, seasonality, etc.;

- store the received digital images of the used garments in association with their characteristics as determined;
- automatically offer for sale the garments thus catalogued on an online marketplace; and
- allow search via appropriate filters, selection and purchase of the used garments represented by the above-mentioned articles.

Conveniently, the system **1** is designed to catalogue the used garments shown in the digital images captured by means of artificial intelligence algorithm. In further detail, the system **1,** in particular the IT resources **6,** comprise an artificial intelligence algorithm (software) based on image recognition, thanks to which, starting from digital images of garments and the respective labels captured by the digital image capture device **4,** the system **1** is designed to extract data useful for assigning the garment to recycling and/or reuse. In this way, as will be evident from the following paragraphs, the system 1 according to present invention allows digitalisation of the garment cataloguing process, also allowing all the information to be obtained relative to the characteristics of the garments considered.

According to a preferred embodiment of the present invention, the artificial intelligence software is a neural network, in particular an algorithm pre-trained on the basis of digital images and training data previously captured; according to an embodiment of the present invention, the artificial intelligence software has been designed on the basis of the transfer learning technique.

In greater detail, the artificial intelligence software is an open source network (in particular, inception res net v2) pre-trained on the basis of a set of digital images of garments and comprising a specialist custom layer based on the reference use case; in this way, the artificial intelligence software is trained to autonomously recognise the garments, in steps subsequent to the training. The artificial intelligence software design and training step is such that the software is particularly advantageous for the purpose of the present patent application, and offers a considerable saving in terms of computing power and static memory occupied within the platform according to the present invention.

In particular, the custom layer has been designed based, for example, on Python Keras library. In further detail, the custom layer comprises:
- a 2D convolutional layer, here comprising thirty-two neurons, designed to receive in input the digital images captured by means of the digital image capture system 3 and to process them, in particular multiply them by a kernel, for example with dimension 3×3, so as to generate an object that contains only the particular aspects of the reference image;
- a pooling layer, designed to reduce the dimensionality of the image provided in input without this causing a loss of information associated with said image;
- a first dense layer, here comprising one hundred and twenty-eight interconnected neurons and designed to construct a non-linear function able to reduce to a greater extent the dimensionality of the kernel coming from the pooling layer and correlate the information extracted from the image with the class to be estimated (for example the type of garment);
- a second dense layer, here comprising one single neuron, designed to provide in output a class associated with the image provided previously in input.

In particular, the pooling layer is designed to receive in input the output of the two-dimensional convolutional layer, here a kernel of numbers containing the information relative to the digital images of the garments captured by said two-dimensional convolutional layer of the digital images, and process it so as to divide it into sub-kernels of smaller dimensions (for example, 2×2) and perform a mathematical operation to synthesize the information of the sub-kernels determined. Conveniently, the used mathematical operations are Max Pooling, which calculates the maximum of the set considered (here, the sub-kernel considered), or Average Pooling, which calculates the mean of the set considered (here, the sub-kernel considered). The output of the pooling layer is therefore a kernel containing the information of the image determined by the two-dimensional convolutional layer and with reduced dimensions.

During the software training step, the data set used in the training step of the above-mentioned software comprises both open source digital images and proprietary digital images (namely, digital images captured purposely to train the software), so as to appropriately train the software.

Once trained, the software is designed so that, when executed, the IT platform **2,** in particular the IT resources **6,** are designed to process the digital images captured and stored to extract information (for example, type of garment, colour, season, gender, fabric, material, size and brand) from the latter relative to the garment shown by the above-mentioned digital images; note that said information extracted is added to the data previously associated with the digital images such as, for example, the presence of defects and the unique code. In further detail, in order to store and process the digital images of the garment so as to determine information relative to the garment characteristics, the software comprises:
- a first computer vision algorithm designed so that, when executed, the system **1,** in particular the IT resources **6,** are designed to determine information relative to the main colour of the digital images received, for example yellow, blue red, etc.;
- a neural network designed so that, when executed, the system **1,** in particular the IT resources **6,** are designed to determine information relative to the type of garment in the captured digital images, for example, T-shirt, pullover, trousers, jacket, etc.; and
- a logic algorithm designed so that, when executed, the system **1,** in particular the IT resources **6,** are designed to determine information relative to the season and the gender of the garment according to the information received from the computer vision algorithm and the neural network, for example attributing a linen skirt to the summer season and the female gender.

Furthermore, the software is designed so that, when executed, the IT system **1,** in particular the IT resources **6,** are designed to process the digital images relative to the label to determine a set of information. Therefore, for said purpose and in order to store and process the digital images of the garment so as to determine information relative to the characteristics of the garment, the software further comprises:
- a second computer vision algorithm designed so that, when executed, the system **1,** in particular the IT resources **6,** are designed to process the captured digital images to extract information relative to the types and percentage of the materials that make up the garment (for example, 100% cotton, 40% cashmere, 50% silk, etc.) and the size of the garment (for example, S, M, L, etc.);
- a third computer vision algorithm designed so that, when executed, the system **1,** in particular the IT resources **6,** are designed to extract from the captured digital images the brand of the garment (for example, Prada, Gucci, Versace, etc.), so as to distinguish the garments based for example on the brand, in particular identifying the luxury garments (typically resold, when second-hand, at a higher price than other second-hand garments).

Note that identification of the composition and relative percentage of the garment allows for more efficient recycling of the garment.

Furthermore, according to a further embodiment of the present invention, the size of a garment is determined also by direct measurement of the garment dimensions from the captured digital images, since the latter are preferably standardized; in this case, the software is designed so that, when executed, the system **1,** in particular the IT resources **6,** is designed to determine the dimensions (in particular, length and width) of a garment based on the captured digital images so as to determine the size. Conveniently, the dimensions can be determined via a computer vision software which, after a step of orientation and standardization of the image, is designed to calculate the dimensions of the garment based on the number of pixels occupied by it in the image, in particular converting the pixels into centimetres.

If the label on the respective captured image is not present or is not readable, the artificial intelligence software is designed so that, when executed, the system **1** is designed to associate with said image and, therefore, with said garment, a datum indicating that said garment is made of unidentified material, has an unidentified size and/or is not branded, for example by attributing the wording "non identified".

The artificial intelligence software further comprises a further logic algorithm so that, when executed, the system **1** is designed to determine the price of the single garment based on the information relative to the characteristics assigned, such as the type of garment, the material, the presence or otherwise of defects and whether it belongs or not to a luxury brand.

According to a further aspect of the present invention, the IT platform **2** can be coupled with a detection system (not shown), for example a system based on NIR (Near-Infrared) spectroscopy, designed to detect indicative quantities of the type of material of the garment with label no longer readable or absent; in this case, the detection system is designed to transmit data indicative of the approximate quantities of the type of material of the garment to the IT platform **2,** which is designed to assign said data to the respective digital images of the garment.

Types of discriminating information determined by the system **1** when the software is executed are listed below:
- main colour: white, blue, sky blue, light green, dark green, yellow, orange, red, pink, fuchsia, purple, brown, beige, black, grey and multicolour if it is not possible to determine a main colour;
- type of garment: shirt, dress, T-shirt or polo shirt, vest or top, jacket or blazer, skirt, jumper or sweatshirt, cardigan or shawl, waistcoat, shorts, trousers or leggings, coat or fur, sports jacket or quilted jacket, scarf or tie, headgear or other;
- season; winter, summer, all seasons;
- gender: men, women, children, unisex;
- size, classified into:
   - women's sizes (international/European): <XS XS S M, L, XL >XL
   - men's sizes (international/European): XS, S, M, L, XL, >XL
- material: linen, cotton, hemp, wool (sheep), cashmere, mohair, alpaca, angora, silk, acetate, viscose, modal or rayon, acrylic, elastane, polyamide or nylon, lyocell or tencel, polyester, leather, other fibres if the percentage is 95% or higher, mixed material (if the percentage is below 950) or composition not known (if the percentage is not known, for example due to missing or illegible label); and
- brand: Prada, Burberry, Gucci, Fendi, Ralph Lauren, Dolce & Gabbana, Valentino, Chanel, Balenciaga, Armani, Yves Saint Laurent, Maison Margiela, Versace, Missoni, Dior, Hermès, Ferragamo, Louis Vuitton, Blumarine, Bottega Veneta, Ermenegildo Zegna, Brunello Cuccinelli, Max Mara, Pierre Cardin, Schiapparelli, Jean-Paul Gaultier, Givenchy, Luisa Spagnoli, Moschino, Balmain, Kenzo, Vivienne Westwood, Loro Piana, Roccobarocco, Etro, Gianfranco Ferrè and Alberta Ferretti.

A further distinguishing information is for example the type of fabric, in particular chiffon or organza or tulle, crêpe, bouclé, damask or jacquard, flannel, pinstripe, jersey, lamé or lurex, knitted fabric, sequins, pied de poule, satin, suede, imitation leather, printed, tartan or Prince of Wales check, piqué, lace, taffeta, tweed, velvet or chenille or Vichy.

Subsequently, the digital images stored and relative associated data comprising data relative to the code associated with the garment collection/sorting organisation, the progressive number and the information relative to the characteristics of the garment determined in the captured digital image processing step, and data relative to the presence of defects in the garment and if necessary their type, are provided to the e-commerce software, in particular to interface with the textile-fashion business customers, so that said e-commerce software, when executed, allows purchase of the used garments analysed by the IT platform **2.** Consequently, the e-commerce software is designed so that, when executed, the IT platform **2** is designed to show a graphic interface to a customer to allow the latter to access the e-commerce via, for example, his/her own user terminal (for example smartphone, tablet, phablet, etc). In particular, according to an embodiment of the present invention, the e-commerce software is a web app accessible via the Internet by the customer. Once the customer has accessed the e-commerce, he/she can search for the garments of interest, for example by applying search filters based on the characteristics of the desired garments (for example, by setting filters relative to the colour, garment type, presence or otherwise of defects, etc.) and find all the garment collection/sorting organisations that can meet the requirement. Therefore, the IT platform **2** is designed so that a user can:
- select filters for separating garments of interest, the filters being determined according to the information relative to the characteristics of the garment determined in the captured digital image processing step;
- display a list of garment collection/sorting organisations that make the filtered garments available;
- select a garment collection/sorting organisation;
- select all the garments he/she wishes to purchase.

Note that, by indicating the presence of defects, the purchaser can be informed that the garment is not suitable for second-hand sale. A further discriminating information is, for example, the quantity of garments of that type that can be purchased, which is a useful datum for example for mechanical recycling firms that operate with large quantities of material and therefore need to work on specific and minimum quantities of material.

As indicated above, once the desired collection/sorting organisation has been selected, the customer can display the digital images of the garments available with the filtered characteristics and select those it wishes to buy, so that it can place them in the cart and proceed with the purchase. The customer can also carry out new searches to find new garments according to new search criteria or select a different organisation if a previous organisation does not fully meet the customer's needs.

An example of a possible search and transaction is now briefly described.

The IT platform **2** is designed so that a customer can access it and select search filters based on its needs; once the filters of interest have been indicated, the IT platform **2** is designed to show the customer the profiles of the garment collection/sorting organisations that can supply the garments with the filtered characteristics. By way of example, a second-hand shop X accesses the IT platform **2** and selects as filters:
- type of garment: skirt;
- gender: women;
- colour: purple, red, patterned;
- season: summer;
- material: cotton;
- for upcycling/regeneration: no (i.e. absence of defects);
- quantity required: 20.

As a result of the search, the IT platform **2** is designed to show as organisations that can supply the garments according to the filters listed above the firm Y of Turin and the firm Z of Prato. Therefore, the second-hand shop X is enabled by the IT platform **2** to select the preferred organisation, accessing the profile thereof, and display the digital images of the garments filtered and the information relative to the characteristics of the garment filtered; if the garments meet the needs of the second-hand shop X, the latter is enabled by the IT platform **2** to select the garments and place them in the shopping trolley. Once the selection has been completed, the second-hand shop X can proceed with the purchase in the trolley or go back and select other organisations, and carry out a new search selecting other filters.

Note that the IT platform **2** can be designed to allow a purchase to be finalised with at least 50 pieces in the cart.

Note that the transaction is carried out directly between the purchaser and the collection/sorting organisation.

In light of the description above, the advantages offered by the present invention are evident.

In this way, the system **1** according to the present invention allows the used garment supply chain to be digitalized and shortened, improving the cataloguing procedures and circular management of the garments, in particular allowing the collection/sorting organisations to directly sell the garments collected and sorted, without agents or exporters, and make good use of the garments, managing more efficiently the demand-supply exchange on the online platform; furthermore, the platform also facilitates reduction in transport with consequent benefit for the environment. From the customer's point of view, the system **1** allows to make the choice of garments to be recycled or reused easily accessible, thus facilitating the transition to circular fashion, since the garments are catalogued so as to make the sale more efficient.

Furthermore, due to the improved cataloguing, the system **1** allows significant reduction in the environmental impact deriving from the wastage of garments and poor recycling thereof.

## Claims

1. A system **(1)** for the circular management of used garments to encourage the reuse and/or recycling thereof in the circular fashion world;
the system **(1)** is designed to:
- receive digital images of used garments;
- process the received digital images of the used garments to catalogue the used garments shown therein based on one or more cataloguing criteria that facilitate the reuse and/or recycling thereof in circular fashion to determine characteristics of the garments, such as the type of garment, colour, brand and seasonality;
- store the received digital images of the used garments together with their determined characteristics;
- automatically put up for sale on an online marketplace the garments thus catalogued; and
- allow search via appropriate filters, selection and purchase of the used garments represented by the above-mentioned articles.

2. The system **(1)** for the circular management of used garments according to claim **1** and comprising:
- a digital image capture system **(3)** configured to capture digital images of used garments and allow the captured digital images to be associated with information concerning the used garments shown therein, such as the presence or not of defects and possibly the types of defects; and
- an IT platform (2) designed to communicate with the digital image capture system **(3)** to receive the digital images of used garments and process the received digital images of the used garments to catalogue the garments shown therein based on one or more cataloguing criteria that facilitate the reuse and/or recycling thereof in circular fashion to determine the characteristics of the garments, such as the type of garment, colour, brand and seasonality.

3. The system **(1)** for the circular management of used garments according to claim **2,** wherein the digital image capture system **(3)** comprises:
- a digital image capture device **(4)** designed to capture digital images of the garments; and
- IT resources **(5)** designed to communicate on the one hand with the digital image capture device **(4)** to receive the digital images captured by the latter and allow an operator to associate the received digital images with the information concerning the used garments shown therein, such as the presence or not of defects and possibly the types of defects, and to communicate on the other hand with the IT platform **(2)** to provide it with the received digital images together with the information associated therewith.

4. The IT system **(1)** for the circular management of used garments according to claim **3,** wherein the digital image capture device **(4)** is a camera supported by a C-stand.

5. The system **(1)** for the circular management of used garments according to claim **3,** wherein the digital image capture system **(4)** is a scanner machine.

6. The system **(1)** for the circular management of used garments according to any one of the claims **2-5,** wherein the IT platform **(2)** further comprises:
- a database **(7)** structured to store digital images of the used garments combined with the information concerning the used garments shown therein associated therewith by an operator and the characteristics of the garments determined by the artificial intelligence algorithm and the relative sources, such as collection/selection bodies or fashion companies; and
- IT resources **(6)** designed to communicate with the digital image capture system **(3)** to receive and process the captured digital images of the used garments and the information concerning the used garments shown therein associated therewith.

7. The system **(1)** for the circular management of used garments according to any one of the claims **2-6,** wherein the IT platform **(2)** is designed to implement an artificial intelligence algorithm designed to process the digital images captured by the digital image capture system **(3)** to determine the characteristics of the garments.

8. The system **(1)** for the circular management of used garments according to any one of the preceding claims, wherein the artificial intelligence algorithms comprise:
- a first computer vision algorithm designed so that, when executed, the IT system **(1)** is designed to determine information relative to the prevalent colour from the digital images received;
- a neural network designed so that, when executed, the IT system **(1)** is designed to determine information relative to the type of garment in the captured digital images; and
- a logic algorithm designed so that, when executed, the IT system **(1)** is designed to determine information relative to the season and type of garment according to the information received from the computer vision algorithm and the neural network; and
- a logic algorithm so that, when executed, the IT system **(1)** is designed to determine the price of the individual garment based on the information relative to the characteristics assigned, such as the type of garment, material, presence or otherwise of defects and whether it belongs or not to a luxury brand.

9. The system **(1)** for the circular management of used garments according to claim **8,** the artificial intelligence algorithms further comprising:
- a second computer vision algorithm designed so that, when executed, the IT system **(1)** is designed to process the captured digital images to extract information relative to the types and percentage of the materials composing the garment; and
- a third computer vision algorithm designed so that, when executed, the IT system **(1)** is designed to extract the brand of the garment from the captured digital images.

10. Software modules for a system **(1)** for the circular management of used garments designed so that, when executed, the system **(1)** for the circular management of used garments operates according to any one of the claims **1-9.**
